# EUROPEAN PATENT APPLICATION

(11) **EP 3 322 019 A1**
(43) Date of publication of application: **16.05.2018**
(21) Application number: 16821633.1
(22) Date of filing: 06.07.2016
(51) Int. Cl.: H01M 8/18, H01M 8/04276

(54) **REDOX FLOW BATTERY**

(30) Priority: 06.07.2015 KR 20150095928
(71) Applicant: Lotte Chemical Corporation, Seoul, 05551 (KR)
(72) Inventor: JUNG, Hyunjin, Daejeon 34120 (KR); KIM, Daesik, Daejeon 35367 (KR); CHOI, Wonseok, Daejeon 34010 (KR); KIM, Tae-Eon, Daejeon 34120 (KR); JEONG, Jinkyo, Daejeon 34120 (KR)
(74) Representative: Delorme, Nicolas
(86) International application number: PCT/KR2016/007296
(87) International publication number: WO 2017/007227

(57) **Abstract**

A redox flow battery according to an embodiment of the present invention includes: a module formed by arranging unit modules, which include unit stacks that generate electric currents, on side surfaces of each other and electrically connecting the same; an electrolyte tank for supplying the module with an electrolyte and storing the electrolyte that flows out of the module; an electrolyte inflow line for connecting the electrolyte tank and the module such that, by means of driving of an electrolyte pump, the electrolyte flows into the module; an electrolyte outflow line for connecting the electrolyte tank and the module such that the electrolyte flows out of the module; and an electronic equipment unit for simultaneously conducting rpm control and frequency control with regard to the rate of the electrolyte pump.

## Description

### [Technical Field]

he present invention relates to a redox flow battery in which an electrolyte stored in an electrolyte tank is supplied into a stack by an electrolyte pump and discharged to produce electricity.

### [Background Art]

It is known that a zinc bromine redox flow battery is a type of a flow cell and produces electricity by a redox reaction that is generated between an electrolyte and an electrode.

For example, the redox flow cell is formed by repeatedly stacking a bipolar electrode and a membrane, and sequentially stacking a current collecting plate and an end cap on both sides of the stacked outermost part, and includes a stack in which the electrolyte is supplied to generate the redox reaction, a pump and a pipe supplying the electrolyte to the stack, an electrolyte tank storing the electrolyte flowing out after an inner reaction in the stack, and a control part constantly controlling power in the stack.

In the redox flow cell, the electrolyte tank includes an anolyte tank accommodating an anolyte containing zinc, a catholyte tank accommodating a catholyte containing bromine, and a two-phase electrolyte tank accommodating two phases of the catholyte. The anolyte tank and the catholyte tank are connected by a first overflow pipe to supply the deficient electrolyte to each other. The two-phase electrolyte tank separates the catholyte flowing out from the stack according to a specific gravity difference, and accommodates aqueous bromine (aqueous Br) at an upper part and heavy complexing bromine (QBr) at a lower part.

The catholyte tank and the two-phase electrolyte tank are connected by a second overflow pipe to supply the aqueous bromine at the upper part to the catholyte tank from the two-phase electrolyte tank. At the time of charging, an amount of the heavy complexing bromine is increased in the two-phase electrolyte tank. At the time of discharging, an amount of the heavy complexing bromine is decreased in the two-phase electrolyte tank.

The stored heavy complexing bromine is only used at the time of discharging. Meanwhile, a length ratio between the anolyte pipe and the catholyte pipe and frequency of the electrolyte pump may be controlled by changing a motor torque of the electrolyte pump. A difference in the motor torque at the time of charging and discharging may be generated by changing a flow rate of the electrolyte depending on a viscosity of the electrolyte, which varies at the time of charging and discharging.

The difference in the flow rate of the electrolyte reduces a reaction area of the electrode with the electrolyte, thereby reducing a discharge amount. Instability of a flow amount of the electrolyte may deteriorate long-term performance of the redox flow battery.

### [DISCLOSURE]

### [Technical Problem]

The present invention has been made in an effort to provide a redox-flow battery having advantages of uniformly distributing an anolyte containing zinc and a catholyte containing bromine inside unit stacks.

The present invention has been made in an effort to provide a redox-flow battery having advantages of controlling an electrolyte pump so as to correspond to a length ratio of an electrolyte line, thereby making a flow of the electrolyte uniform.

### [Technical Solution]

An exemplary embodiment of the present invention provides a redox flow battery including: a module formed by disposing unit modules including unit stacks that generate electric currents on side surfaces of each other and electrically connecting the unit modules; an electrolyte tank supplying an electrolyte to the module and storing the electrolyte flowing out from the module; an electrolyte inflow line connecting the electrolyte tank and the module so that the electrolyte flows into the module by driving an electrolyte pump; an electrolyte outflow line connecting the electrolyte tank and the module so that the electrolyte flows out from the module; and a control part simultaneously conducting rpm control and frequency control with regard to a rate of the electrolyte pump.

According to an embodiment of the present invention, the electrolyte tank may include an anolyte tank accommodating an anolyte supplied between a membrane and an anode of the unit stack by an anolyte pump, a catholyte tank accommodating a catholyte supplied between a membrane and a cathode of the unit stack by a catholyte pump, and being connected to the anolyte tank via a first overflow pipe, and a two-phase electrolyte tank accommodating two phases of the catholyte flowing out between the membrane and the cathode, being connected to the catholyte tank via a second overflow tank pipe, and being connected to a lower portion of the catholyte tank via a communication pipe.

According to an embodiment of the present invention, the electrolyte inflow line may include an anolyte inflow line connecting the anolyte tank and the module, and a catholyte inflow line connecting the catholyte tank and the module, wherein a ratio of a length of the anolyte inflow line to a length of the catholyte inflow line may be 1 to 1.5 : 1.

According to an embodiment of the present invention, the anolyte pump may be controlled at 2300 to 2700 rpm, the catholyte pump may be controlled at 1800 to 2200 rpm, the anolyte pump may be controlled at 150 to 200 Hz, and the catholyte pump may be controlled at 100 to 150 Hz.

According to an embodiment of the present invention, the anolyte inflow line and the catholyte inflow line may be connected to a side of the module at a height below the top of the unit module.

According to an embodiment of the present invention, the electrolyte pump provided in the electrolyte inflow line connecting the electrolyte tank and the module may be controlled by the control part simultaneously conducting the rpm control and the frequency control, and thus, it is possible to prevent phenomenon that a motor torque of the electrolyte pump is changed.

### [Advantageous Effects]

According to an embodiment of the present invention, since the motor torque of the electrolyte pump is constant at the time of charging and discharging, a flow rate, a hydraulic pressure, and a flow amount of the electrolyte may be constantly controlled even when a viscosity of the electrolyte is changed at the time of charging and discharging.

The flow rate, the hydraulic pressure, and the flow amount of the electrolyte are constant, and thus, a reaction area of the anode and the cathode with the electrolyte may be increase to thereby increase a discharge amount (current). That is, stabilization of the flow rate, the hydraulic pressure, and the flow amount of the electrolyte may improve long-term performance of the redox flow battery.

Further, according to an embodiment of the present invention, since the unit modules are disposed on the side surfaces of the unit modules and electrically connected to each other, and the electrolyte inflow line is connected to the side of the module at a height below the top of the unit module, and thus, the electrolyte may be uniformly distributed inside the unit stacks.

### [Description of the Drawings]

FIG. 1 is a configuration diagram of a redox flow battery according to an exemplary embodiment of the present invention.
FIG. 2 is a perspective view showing a module and an electrolyte tank applied in FIG. 1.
FIG. 3 is an exploded perspective view of a unit stack applied in FIG. 2.
FIG. 4 is a cross-sectional view taken along the line IV-IV in FIG 3.
FIG. 5 is a cross-sectional view taken along the line V-V in FIG 3.
FIG. 6 is a configuration diagram of a redox flow battery according to Comparative Example.
FIG. 7 is a graph showing comparison in module efficiency between rpm control only and frequency and rpm control with regard to a speed of an electrolyte pump in Example and Comparative Example of the present invention.
FIG. 8 is a graph showing comparison in an increase in a discharge amount (voltage) between the rpm control only and the frequency and rpm control with regard to the speed of the electrolyte pump in Example of the present invention.

**[Detailed Description of Main Elements]**

| | | | |
|---|---|---|---|
| 10: | Membrane | 20: | Spacer |
| 30: | Electrode plate | 31: | Cathode |
| 32: | Anode | 40, 50: | (Membrane, electrode) flow frame |
| 61, 62: | First and second current collecting plate | | |
| 71, 72: | First and second end cap | | |
| 100: | Unit stack | 110: | Unit module |
| 120: | Module | 200: | Electrolyte tank |
| 201, 202: | First and second overflow pipe | 203: | Communication pipe |
| 205: | Four-way valve | 206: | Intermittent valve |
| 210: | Anolyte tank | 20: | Catholyte tank |
| 230: | Two-phase electrolyte tank | 300: | Frame |
| 500: | Control part | B2: | Bus bar |
| C1, C2: | Unit cell | CH1, CH2: | First and second flow channel |
| H21, H31: | Electrolyte inlet | H22, H32: | Electrolyte outlet |
| La1 Lc1: | Anolyte and catholyte inflow line | | |
| La2, Lc2: | Anolyte and catholyte outflow line | | |
| Pa, Pc: | Anolyte and catholyte pump | | |
| La, Lc: | Length | IV: | Inner volume |

### [Mode for Invention]

Hereinafter, the present invention will be described more fully hereinafter with reference to the accompanying drawings, in which exemplary embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising", will be understood to imply the inclusion of stated elements but not the exclusion of any other elements.

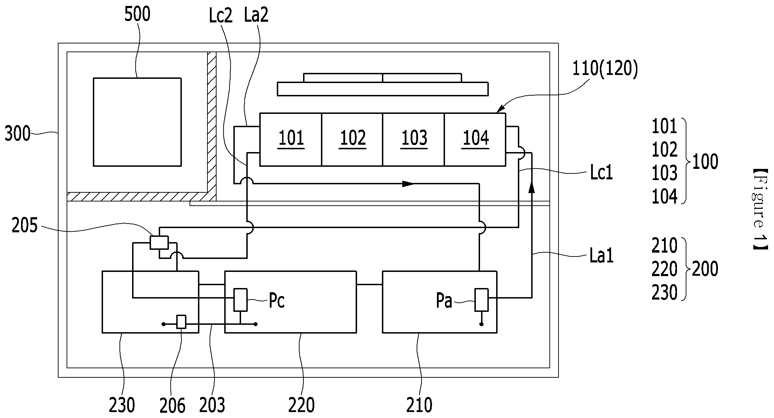

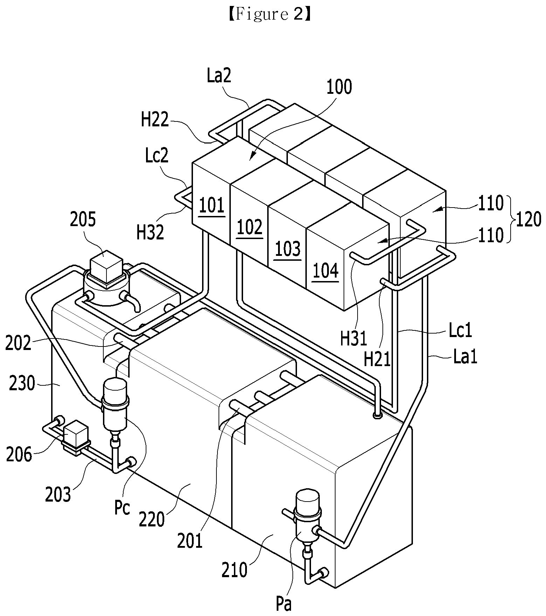

FIG 1 is a configuration diagram of a redox flow battery according to an exemplary embodiment of the present invention and FIG 2 is a perspective view showing a module and an electrolyte tank applied in FIG 1. Referring to FIGS. 1 and 2, the redox flow battery of an exemplary embodiment includes a module 120 generating an electric current, and an electrolyte tank 200 supplying an electrolyte to the module 120 and storing an electrolyte flowing out from the module 120.

The module 120 includes a plurality of unit modules 110. For example, the module 120 is formed by disposing two unit modules 110 on side surfaces of each other and electrically connecting the unit modules. The unit module 110 is configured to generate an electric current by circulating the electrolyte, and for example, includes four unit stacks 100 each.

For example, the electrolyte tank 200 includes an anolyte tank 210 accommodating an anolyte containing zinc, a catholyte tank 220 accommodating a catholyte containing bromine, and a two-phase electrolyte tank 230 accommodating two phases of the catholyte.

Further, the redox flow battery according to an exemplary embodiment of the present invention includes electrolyte inflow lines La1 and Lc1 connecting the electrolyte tank 200 and the module 120 so that the electrolyte flows into the module 120 by driving electrolyte pumps Pa and Pc; electrolyte outflow lines La2 and Lc2 connecting the electrolyte tank 200 and the module 120 so that the electrolyte flows out from the module 120; and a control part 500 simultaneously conducting rpm control and frequency control with regard to a rate of the electrolyte pumps Pa and Pc. As an example, the electrolyte pumps Pa and Pc may be formed to be motor pumps that are speed-controlled by frequency and rpm control.

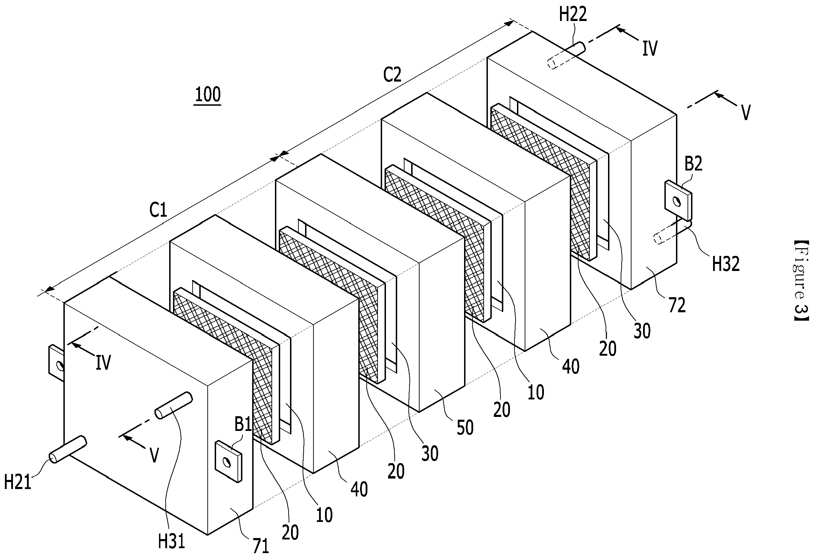

FIG. 3 is an exploded perspective view of the unit stack applied in FIG. 2. Referring to FIGS. 2 and 3, the anolyte tank 210 supplies the anolyte between the membrane 10 and the anode 32 of the unit stack 100 and accommodates the anolyte flowing out via between the membrane 10 and the anode 32.

The catholyte tank 220 accommodates the catholyte supplied between the membrane 10 and the cathode 31 of the unit stack 100 and is connected to the anolyte tank 210 by a first overflow pipe 201. The first overflow pipe 201 allows the electrolytes of the anolyte and catholyte tanks 210 and 220 to be exchanged with each other.

The two-phase electrolyte tank 230 accommodates the catholyte (an electrolyte including two phases of aqueous bromine and heavy complexing bromine) flowing out via between the membrane 10 and the cathode 31 of the unit stack 100, and is connected to the catholyte tank 220 by a second overflow pipe 202. In addition, a lower part of the two-phase electrolyte tank 230 and a lower part of the catholyte tank 220 are connected to each other by a communication pipe 203.

The two-phase electrolyte tank 230 separates the catholyte flowing out between the membrane 10 and the cathode 31 into two phases according to specific gravity. That is, the two-phase electrolyte tank 230 accommodates the heavy complexing bromine at a lower side and the aqueous bromine at an upper side. The aqueous bromine is supplied to the catholyte tank 220 through the second overflow pipe 202.

That is, in the second overflow pipe 202, the aqueous bromine at the upper side is supplied to the catholyte tank 220. At the time of discharging, the heavy complexing bromine at the lower side may be supplied between the membrane 10 and the cathode 31 instead of the catholyte of the catholyte tank 220 through the communication pipe 203.

To this end, the electrolyte inflow lines La1 and Lc1 include the anolyte inflow line La1 connecting the anolyte tank 210 to the module 120 and include the catholyte inflow line Lc1 connecting the two-phase electrolyte tank 230 to the module 120 at the time of discharging or the catholyte tank 220 to the module 120 at the time of charging.

The electrolyte outflow lines La2 and Lc2 include an anolyte outflow line La2 connecting the anolyte tank 210 to the module 120 and a catholyte outflow line La2 connecting the two-phase electrolyte tank 230 to the module 120.

The anolyte inflow line La1 and the catholyte inflow line Lc1 include the anolyte pump Pa and the catholyte pump Pc interposed therebetween and connect electrolyte inlets H21 and H31 of the unit stack 100 to the anolyte tank 210 and the catholyte tank 220 or the two-phase electrolyte tank 230, respectively. The anolyte outlow line La2 and the catholyte outflow line Lc2 connect the anolyte tank 210 and the two-phase electrolyte tank 230 to the electrolyte outlets H22 and H32 of the unit stack 100, respectively.

The anolyte tank 210 includes an anolyte containing zinc, and circulates the anolyte between the membrane 10 and the anode 32 of the unit stack 100 by driving the anolyte pump Pa.

The catholyte tank 220 or the two-phase electrolyte tank 230 includes a catholyte containing bromine, and circulates the catholyte between the membrane 10 and the cathode 31 of the unit stack 100 by driving the catholyte pump Pc.

Further, the two-phase electrolyte tank 230 receives the catholyte, which flows out between the membrane 10 and the cathode 31 of the unit stack 100, from the cathode outflow line Lc2 by driving the catholyte pump Pc, and accommodates the heavy complexing bromine at the lower side and the aqueous bromine at the upper side according to a specific gravity difference.

Meanwhile, the catholyte inflow line Lc1 and the catholyte outlow line Lc2 include a four-way valve 205 interposed therebetween and selectively connect the catholyte tank 220 and the two-phase electrolyte tank 230 to the module 120, and thus, it is possible to selectively perform inflow operation and outflow operation of the catholyte with regard to the module 120.

The communication pipe 203 may be provided with an intermittent valve 206 to supply the catholyte of the two-phase electrolyte tank 230 to the module 120 by driving the catholyte pump Pc at the time of discharging. That is, when the intermittent valve 206 is closed at the time of charging, the catholyte of the catholyte tank 220 is supplied to the catholyte inflow line Lc1, and when the intermittent valve 206 is opened at the time of discharging, the catholyte of the two-phase electrolyte tank 230 is supplied to the catholyte inflow line Lc1.

In addition, the unit stack 100 is electrically connected to another unit stack 100 neighboring thereto through bus bars B1 and B2. The unit module 110 and the module 120 may discharge an electric current generated in the unit stacks 100 through the bus bars B1 and B2 or may be connected to an external power source to charge the anolyte tank 210 and the two-phase electrolyte tank 230.

For example, the unit stack 100 may be formed by stacking a plurality of unit cells C1 and C2. For convenience, the unit stack 100 formed by stacking two unit cells (C1, C2) is exemplified in the present exemplary embodiment.

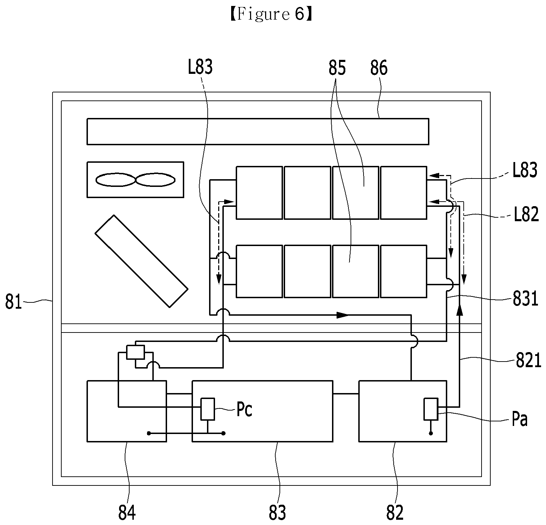

The unit stacks 100 are stacked as shown in FIG. 2 to thereby form the unit module 110. The unit modules 120 are disposed on the sides of each other to thereby form the module 120. Therefore, as compared to a case where the unit modules are disposed in a vertical direction (see Comparative Example in FIG. 6), flow and internal pressure of the electrolyte to the unit stacks 100 of the module 120 may be allowed to be uniform.

The uniformity of the flow and internal pressure of the electrolyte increases a reaction area of the electrolyte and the cathode and the anode 31 and 32, thereby increasing the discharge amount (electric current). As a result, module efficiency at the time of charging and discharging may be improved. The improvement of the module efficiency may improve durability and long-term cycle stability of the unit stacks 100.

In the unit stack 100, the electrolyte inlets H21 and H31 are provided in a left unit cell C1, and the electrolyte inlets H21 and H31 include the anolyte pump Pa and the catholyte pump Pc interposed therebetween to thereby be connected to the anolyte tank 210 and the catholyte tank 220 or the two-phase electrolyte tank 230, respectively, by the anolyte inflow line La1 and the catholyte inflow line La2.

Further, the electrolyte inlets H22 and H32 are provided in a right unit cell C2, and the electrolyte outlets H22 and H32 are connected to the anolyte tank 210 and the two-phase electrolyte tank 230, respectively, by the catholyte inflow line Lc1 and the catholyte inflow line Lc2.

In the electrolyte inlets H21 and H31, the electrolyte of the anolyte tank 210 and the catholyte tank 220 or the two-phase electrolyte tank 230 flows into the left unit cell C1, respectively. In the electrolyte outlets H22 and H32, the electrolyte, which flows out from the right unit cell C2, flows out to the anolyte tank 210 and the two-phase electrolyte tank 230, respectively, via the unit stack 100.

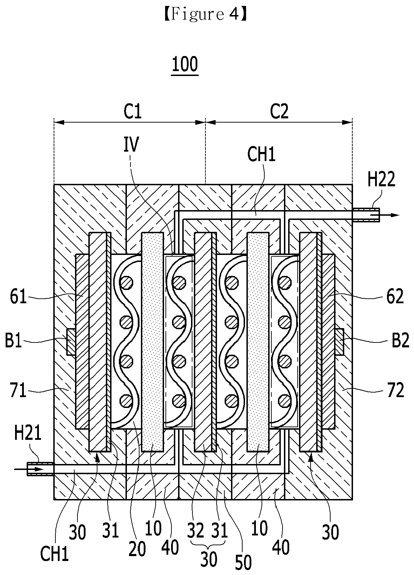

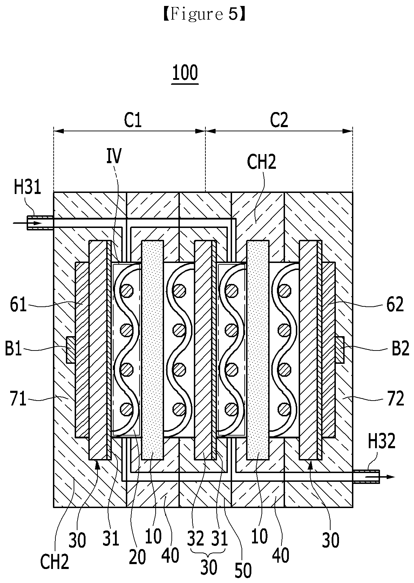

FIG. 4 is a cross-sectional view taken along the line IV-IV in FIG 3, and FIG. 5 is a cross-sectional view taken along the line V-V in FIG 3. Referring to FIGS. 3 to 5, the unit stack 100 includes a membrane 10, a spacer 20, an electrode plate 30, a flow frame (e.g., a membrane flow frame 40, an electrode flow frame 50), first and second current collecting plates 61 and 62, and first and second end caps 71 and 72.

For example, since the unit stack 100 is provided with two unit cells C1 and C2, the unit stack 100 includes one electrode flow frame 50 disposed at the center, two membrane flow frames 40 disposed on both sides of the electrode flow frame 50 in a symmetric structure, and two first and second end caps 71 and 72 disposed on outer periphery of each of the membrane flow frames 40.

The membrane 10 is configured to pass ions and is coupled to the membrane flow frame 40 at the center in a thickness direction of the membrane flow frame 40. The electrode plate 30 is coupled to the electrode flow frame 50 at the center in a thickness direction of the electrode flow frame.

The first end cap 71, the membrane flow frame 40, the electrode flow frame 50, the membrane flow frame 40, and the second end cap 72 are disposed, each spacer 20 is interposed between the membrane 10 and the electrode plate 30, and the membrane flow frame 40, the electrode flow frame 50, and the first and second end caps 71 and 72 are bonded to each other, thereby forming the unit stack 100 provided with two unit cells C1 and C2.

The electrode plate 30 includes the anode 32 formed on one side and the cathode 31 formed on the other side in a portion where the two unit cells C1 and C2 are connected to each other, and thus, a bipolar electrode in which the two unit cells C1 and C2 are connected in series is formed. A carbon coating layer may be formed on the cathode 31.

The membrane flow frame 40, the electrode flow frame 50, and the first and second end caps 71 and 72 are adhered to each other to set an internal volume IV between the membrane 10 and the electrode plate 30. There are provided a first flow channel CH1 (see FIG. 4) and a second flow channel CH2 (see FIG. 5) supplying the electrolyte into the internal volume IV. The first and second flow channels CH1 and CH2 are configured to supply the electrolyte at a uniform pressure and in a uniform amount, respectively, at both sides of the membrane 10.

The membrane flow frame 40, the electrode flow frame 50, and the first and second end caps 71 and 72 may be formed of an electrically insulating material containing a synthetic resin component, and may be adhered by thermal welding or vibration welding.

The first flow channel CH1 connects the electrolyte inlet H21, the internal volume IV, and the electrolyte outlet H22, and thus, the anolyte may flow into the internal volume IV set between the membrane 10 and the anode 32 by driving the anolyte pump Pa, and may flow out after reacting (see FIG. 4).

The second flow channel CH2 connects the electrolyte inlet H31, the internal volume IV, and the electrolyte outlet H32, and thus, the catholyte may flow into the internal volume IV set between the membrane 10 and the cathode 31 by driving the catholyte pump Pc, and may flow out after reacting (see FIG. 5).

The anolyte generate an electric current by a redox reaction at a side of the anode 32 of the internal volume IV, and is stored in the anolyte tank 200. The catholyte generate the electric current by the redox reaction at a side of the cathode 31 of the internal volume IV, and is stored in the two-phase electrolyte tank 230.

At the time of charging, between the membrane 10 and the cathode 31,
the following chemical reaction according to Equation 1 is generated, and thus, bromine contained in the catholyte is produced and stored in the two-phase electrolyte tank 230:

2Br⁻ → 2Br+2e⁻ Equation 1.

Here, the bromine is immediately mixed by quaternary ammonium ions in the catholyte so as to form a high-density second phase that is immediately removed from the unit stack 100, such as the catholyte. The aqueous bromine separated from the two-phase electrolyte tank 230 overflows to the catholyte tank 220 through the second overflow pipe 202.

At the time of charging, between the membrane 10 and the anode 32,
the following chemical reaction according to Equation 2 is generated, and thus, zinc contained in the anolyte is deposited on the anode 32 and stored:

Zn²⁺ + 2e⁻ → Zn Equation 2.

At this time, the anolyte or the catholyte between the anolyte tank 210 and the catholyte tank 220 may overflow to each other through the first overflow pipe 201.

At the time of discharging, a reverse reaction of Equation 1 is generated between the membrane 10 and the cathode 31, and a reverse reaction of Equation 2 is generated between the membrane 10 and the anode 32.

The first and second current collecting plates 61 and 62 are adhered to the outermost electrode plates 30 and 30 to be electrically connected so as to collect the electric current generated in the cathode 31 and the anode 32 or to supply the electric current to the cathode 31 and the anode 32 from the outside.

In the unit stack 100, the unit module 110 and the module 120, it is required to discharge the generated electric current or to charge the electric current to the anolyte tank 210 and the two-phase electrolyte tank 230 by being connected to an external power source.

To this end, the first end cap 71 is integrally formed by accommodating the first current collecting plate 61 connected to the bus bar B1 and the electrode plate 30 connected to the first current collecting plate 61, thereby forming one side edge of the unit stack 100. The first end cap 71 may be formed by inserting the bus bar B1, the first current collecting plate 61, and the electrode plate 30, and performing insert injection.

The second end cap 72 is integrally formed by accommodating the second current collecting plate 62 connected to the bus bar B2 and the electrode plate 30 connected to the second current collecting plate 62, thereby forming the other side edge of the unit stack 100. The second end cap 72 may be formed by inserting the bus bar B2, the second current collecting plate 62, and the electrode plate 30, and performing insert injection.

The first end cap 71 includes the anolyte and catholyte inlets H21 and H31 on one side to be connected to the first and second flow channels CH1 and CH2, and thus, the catholyte and the anolyte flow in, respectively. The second end cap 72 includes the electrolyte outlets H22 and H32 on one side to be connected to the first and second flow channels CH1 and CH2, and thus, the catholyte and the anolyte flow out, respectively

That is, the catholyte that flows out through the catholyte outflow line Lc2 and the four-way valve 205 flows into the two-phase electrolyte tank 230. Accordingly, the heavy complexing bromine contained in the catholyte that flows into the two-phase electrolyte tank 230 is positioned at a lower side.

Therefore, the aqueous bromine is positioned at an upper side and overflows from the two-phase electrolyte tank 230 to the second overflow pipe 202, and the heavy complexing bromine does not overflow.

At the time of charging, the intermittent valve 206 is closed to thereby supply the catholyte to the catholyte inflow line Lc1 from the catholyte tank 220. Here, the two-phase electrolyte tank 230 accommodates the catholyte.

At the time of discharging, the catholyte is supplied from the catholyte tank 220 to the catholyte inflow line Lc1. In addition, at the time of discharging, the intermittent valve 206 is opened to supply the catholyte containing the heavy complexing bromine to the cathoyte inflow line Lc1.

Referring again to FIGS. 1 and 2, the electrolyte inflow lines La1 and Lc1 are connected to a side of the module 120 at a height below the top of the unit module 110. That is, the electrolyte inflow lines La1 and Lc1 are not higher than the maximum height of the unit module 110.

Specifically, the anolyte inflow line La1 and the catholyte inflow line Lc1 are connected to the side of the module 120 at the height below top of the unit module 110. That is, since the unit modules 110 are disposed on the sides of each other, the overall height of the module 120 is set equal to the height of the unit module 110.

As compared to a case where the unit modules are stacked in the vertical direction (see Comparative Example described below), in the present Example, the unit modules 110 are disposed on a plane, and thus, the unit module 110 and the unit stack 100 are able to be easily replaced, and a length of the electrolyte inflow lines La1 and Lc1 in a height direction is shortened, and thus, the height of the electrolyte inflow lines La1 and Lc1 with regard to the unit modules 110 becomes uniform.

Therefore, the electrolyte is uniformly distributed with regard to the unit modules 110, and further, the electrolyte may be uniformly injected into the unit stacks 100 in each unit module 110. That is, resistance of a shunt current may be reduced. In addition, as the length of the electrolyte inflow lines La1 and Lc1 in the height direction is shortened, it is possible to improve stability of the unit stacks 100 due to reduction of the internal pressure.

That is, since the electrolyte flows smoothly in the electrolyte inflow lines La1 and Lc1, the internal resistance of the unit stacks 100 may be reduced and the Zn-deposition may be uniformly dissolved, and thus, the internal pressure may be reduced.

Further, the catholyte inflow line Lc1 and the catholyte outflow line Lc2 in which the module 120 is connected to the catholyte tank 220 and the two-phase electrolyte tank 230 through the four-way valve 205 interposed therebetween are connected to both sides of the module 120 at the height below the top of the unit module 110.

The heavy complexing bromine (QBr), which is produced when charging and is used when discharging, is heavy and has a high viscosity. However, the heavy complexing bromine may flow smoothly by arranging the unit modules 110 at the side so that the length of the electrolyte inflow lines La1 and Lc1 is shortened and a difference in length is removed.

Accordingly, since the internal resistance of the module 120 is reduced and a flow property of the shunt current is excellent, a driving speed of the anolyte and catholyte pumps Pa and Pc may not be increased. As a result, it is possible to reduce the pressure inside the electrolyte inflow lines La1 and Lc1 and the module 120, and to lower risk of electrolyte leakage.

Meanwhile, the redox flow battery of an exemplary embodiment further includes a frame 300 that accommodates the module 120, the electrolyte tank 200, and the control part 500. The frame 300 is configured to accommodate the electrolyte tank 200 at a lower part thereof, accommodate the module 120 at an upper part thereof, and include the control part 500 on one side of the upper part thereof.

The control part 500 is provided with a battery management system (BMS), and may simultaneously conduct rmp control and frequency control with the BMS, and thus, a motor speed of the anolyte and catholyte pumps Pa and Pc may be more accurately controlled. As an example, a motor of the anolyte and catholyte pumps Pa and Pc may be a BLDC motor, and frequency may be measured by a hook-meter.

Since the BMS of the control part 500 controls the motor speed more accurately, a flow rate, a hydraulic pressure and a flow amount of the electrolyte may be accurately controlled even when the viscosity of the electrolyte is changed by operating the redox flow battery, and thus, it is possible to uniformly supply the electrolyte around the cathode and the anode 31 and 32.

Here, a ratio (La : Lc) of a length La of the anolyte inflow line La1 to a length Lc of the catholyte inflow line Lc1 is 1 to 1.5 : 1 (La : Lc = 1 to 1.5: 1). The length La of the anolyte inflow line La1 is the same or longer than the length Lc of the catholyte inflow line Lc1. That is, the BMS of the control part 500 controls the motor speed of the anolyte and catholyte pumps Pa and Pc by reflecting the ratio (La : Lc) of the lengths La and Lc.

The disposition of the module 120 and the ratio (La : Lc) of the lengths La and Lc increase a reaction area of the electrolyte, cathode, and the anode 31 and 32 to thereby increase the discharge amount (current). Thus, the module efficiency may be further improved.

As an example, the control part 500 controls the speed of the anolyte pump Pa to 2300 to 2700 rpm, the speed of the catholyte pump Pc to 1800 to 2200 rpm, the speed of the anolyte pump Pa to 150 to 200 Hz, and the speed of the catholyte pump Pc to 100 to 150 Hz.

Since the length La of the anolyte inflow line La1 is longer than the length Lc of the catholyte inflow line Lc1, the rpm and the frequency Hz of the speed of the anolyte pump Pa are higher than the rpm and the frequency Hz of the speed of the catholyte pump Pc.

Table 1 shows comparison in an average module efficiency between a case where the speed of the electrolyte pumps Pa and Pc is controlled by the rpm only and a case where the speed of the electrolyte pumps Pa and Pc is controlled by the rpm and the frequency in the redox flow battery of an Example.

**(Table 1)**

| | | Anolyte pump | Catholyte pump | 5 Cycle average module efficiency |
|---|---|---|---|---|
| Controlled by rpm only | rpm | 2300-2700 | 1800-2200 | 60.65% |
| Controlled by frequency and rpm | rpm | 2300-2700 | 1800-2200 | 64.34% |
| | frequency | 150-200Hz | 100-150Hz | |

Table 1 shows that a 5 cycle average module efficiency when the speed of the anolyte and catholyte pumps Pa and Pc of an exemplary embodiment was controlled by only the same rpm was 60.65%, which was higher than 64.34%, a 5 cycle average module efficiency when the speed of the anolyte and catholyte pumps Pa and Pc of the Example was controlled by the same frequency and rpm.

FIG. 6 is a configuration diagram of a redox flow battery according to Comparative Example. Referring to FIG. 6, a redox flow battery of Comparative Example is provided with an anolyte tank 82, a catholyte tank 83, and a two-phase electrolyte tank 84 at a lower side of a frame 81, stacks 85 are stacked in two layers at an upper part thereof, and a control part 86 is provided at an upper part of the stack 85.

An anode piping 821 connecting the anolyte tank 82 and the stack 85 and cathode pipings 831 and 832 connecting the catholyte tank 83 and the stack 85 further include, as compared to the Example, lengths L82 and L83 at a height range corresponding to the two-layer stack 85, in order to supply the electrolyte to the two-layer stack 85.

Since the stack 85 is stacked in two layers and the anode piping 821 and the cathode piping 831 have a height difference, uniformity of electrolyte distribution with respect to the stacks 85 is lowered, and the lengths L82 and L83 of the pipings 821, 831, and 832 are at the supply side of the electrolyte become longer, and thus, the internal pressure may be increased to deteriorate the stability of the stack as compared to the Example.

Table 2 shows comparison in an average module efficiency between a case where the speed of the electrolyte pumps Pa and Pc is controlled by the rpm only and a case where the speed of the electrolyte pumps Pa and Pc is controlled by the rpm and the frequency in the redox flow battery of Comparative Example.

**(Table 2)**

| | | Anolyte pump | Catholyte pump | 5 Cycle average module efficiency |
|---|---|---|---|---|
| Controlled by rpm only | rpm | 2000-2400 | 1600-2000 | 58.56% |
| Controlled by frequency and rpm | rpm | 2000-2400 | 1600-2000 | 59.72% |
| | Frequency | 150-180Hz | 100-130Hz | |

Table 2 shows that a 5 cycle average module efficiency when the speed of the anolyte and catholyte pumps Pa and Pc of the Comparative Example was controlled by only the same rpm was 58.56%, which was higher than 59.72%, a 5 cycle average module efficiency when the speed of the anolyte and catholyte pumps Pa and Pc of the Comparative Example was controlled by the same frequency and rpm.

That is, regardless of the disposition of the unit modules 110 forming the module 120, it could be appreciated that the average module efficiency in the case where the speed of the anolyte and catholyte pumps Pa and Pc was controlled by the frequency and the rpm was higher than the average module efficiency in the case where the speed of the anolyte and catholyte pumps Pa and Pc was controlled by the rpm only.

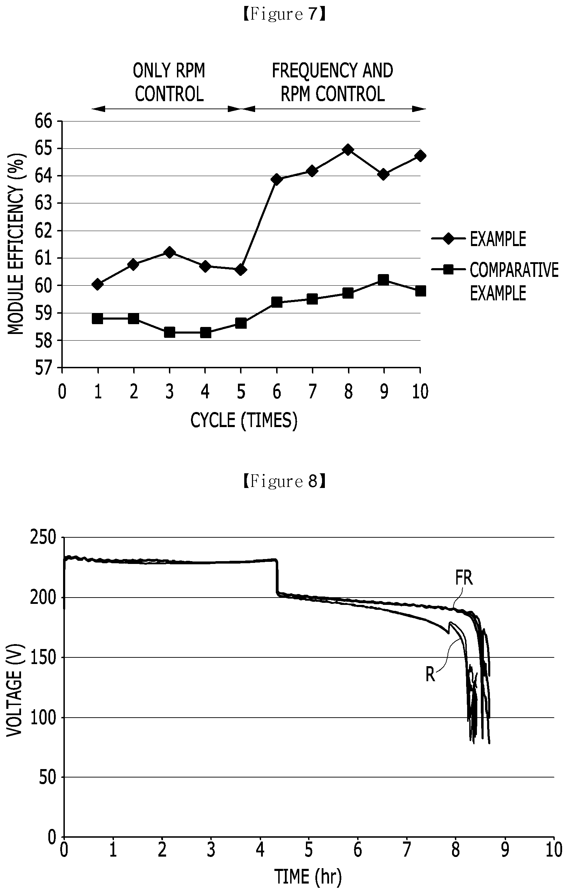

FIG. 7 is a graph showing comparison in module efficiency between rpm control only and frequency and rpm control with regard to a speed of an electrolyte pump in Example and Comparative Example of the present invention. Referring to FIG. 7, in the Comparative Example and the Example, the module efficiency was increased in the case where the frequency control and the rpm control were simultaneously conducted as compared to the case where only the rpm control was conducted.

It could be appreciated that in the Comparative Example, when the frequency control and the rpm control were simultaneously conducted, the increase in module efficiency was slight as compared to that when only the rpm control was conducted. On the other hand, it could be appreciated that in the Example, when the frequency control and the rpm control were simultaneously conducted, the increase in module efficiency was larger than that when only the rpm control was conducted.

FIG. 8 is a graph showing comparison in an increase in a discharge amount (voltage) between the rpm control only and the frequency and rpm control with regard to the speed of the electrolyte pump in Example of the present invention. Referring to FIG. 8, it could be appreciated that in the Example, when the frequency control and the rpm control were simultaneously conducted (shown as FR in FIG. 8), the discharging amount (voltage) was higher than that when only the rpm control was conducted (shown as R in FIG. 8).

In the Comparative Example and the Example, when the length ratio (La : Lc) of the electrolyte inflow line and the speed of the anolyte and catholyte pumps Pa and Pc were controlled by simultaneously conducting the frequency control and the rpm control, the module efficiencies shown in Tables 3 and 4 were implemented.

**(Table 3)**

| | | Anode | Cathode | Module efficiency |
|---|---|---|---|---|
| Length ratio of electrolyte inflow line | Comparative Example | 1.1 | 1 | 59.72% |
| | Example | 1.5 | 1 | 58.48% |
| | rpm | 2000-2400 | 1600-2000 | - |
| | Frequency | 150-180Hz | 100-130Hz | |

In Table 3, the Example in which the ratio (La : Lc) of the length La of the anolyte inflow line La1 to the length Lc of the catholyte inflow line Lc1 was 1.5 : 1 had the module efficiency of 58.48%, which was lower than 59.72%, the module efficiency of the Comparative Example in which the ratio (La : Lc) was 1.1 : 1 at the same rpm and frequency.

**(Table 4)**

| | | Anode | Cathode | Module efficiency |
|---|---|---|---|---|
| Length ratio of electrolyte inflow line | Comparative Example | 1.1 | 1 | 57.39% |
| | Example | 1.5 | 1 | 64.34% |
| | rpm | 2300-2700 | 1800-2200 | - |
| | Frequency | 150-200Hz | 100-150Hz | |

In Table 4, the Example in which the ratio (La : Lc) of the length La of the anolyte inflow line La1 to the length Lc of the catholyte inflow line Lc1 was 1.5 : 1 had the module efficiency of 64.34, which was higher than 57.39%, the module efficiency of the Comparative Example in which the ratio (La : Lc) was 1.1 : 1 at the same rpm and frequency.

As described above, the electrolyte pumps Pa and Pc are controlled at the optimum frequency and the optimum rpm according to the ratio (La : Lc) of the lengths La and Lc, and thus, the motor torque of the electrolyte pumps Pa and Pc is constant. Accordingly, even when the viscosity of the electrolyte is changed when the redox flow battery is charged and discharged, it is possible to control the flow rate of the electrolyte. As a result, the reaction area of the electrode with the electrolyte may be increased, the discharge amount (electric current) may be increased, and the flow amount of the electrolyte may be stabilized.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A redox flow battery comprising:
a module formed by disposing unit modules including unit stacks that generate electric currents on side surfaces of each other and electrically connecting the unit modules;
an electrolyte tank supplying an electrolyte to the module and storing the electrolyte flowing out from the module;
an electrolyte inflow line connecting the electrolyte tank and the module so that the electrolyte flows into the module by driving an electrolyte pump;
an electrolyte outflow line connecting the electrolyte tank and the module so that the electrolyte flows out from the module; and
a control part simultaneously conducting rpm control and frequency control with regard to a rate of the electrolyte pump.

2. The redox flow battery of claim 1, wherein:
the electrolyte tank includes
an anolyte tank accommodating an anolyte supplied between a membrane and an anode of the unit stack by an anolyte pump,
a catholyte tank accommodating a catholyte supplied between a membrane and a cathode of the unit stack by a catholyte pump, and being connected to the anolyte tank by a first overflow pipe, and
a two-phase electrolyte tank accommodating two phases of the catholyte flowing out between the membrane and the cathode, being connected to the catholyte tank by a second overflow tank pipe, and being connected to a lower portion of the catholyte tank by a communication pipe.

3. The redox flow battery of claim 2, wherein:
the electrolyte inflow line includes
an anolyte inflow line connecting the anolyte tank and the module, and
a catholyte inflow line connecting the catholyte tank and the module,
wherein a ratio of a length of the anolyte inflow line to a length of the catholyte inflow line is 1 to 1.5 : 1.

4. The redox flow battery of claim 3, wherein:
the anolyte pump is controlled at 2300 to 2700 rpm, the catholyte pump is controlled at 1800 to 2200 rpm,
the anolyte pump is controlled at 150 to 200 Hz, and the catholyte pump is controlled at 100 to 150 Hz.

5. The redox flow battery of claim 3, wherein:
the anolyte inflow line and the catholyte inflow line are
connected to a side of the module at a height below the top of the unit module.
